# EUROPÄISCHE PATENTSCHRIFT

(11) **EP 2 531 321 B1**
(45) Veröffentlichungstag und Bekanntmachung des Hinweises auf die Patenterteilung: **30.08.2023**
(21) Anmeldenummer: 10795231.9
(22) Anmeldetag: 09.12.2010
(51) Int. Cl.: B23K 11/14, B23K 35/02, B23K 11/00, B23K 9/20

(54) **WARMNIETVERBINDUNG**
HOT RIVET CONNECTION
ASSEMBLAGE PAR RIVETAGE À CHAUD

(30) Priorität: 03.02.2010 DE 102010006670
(43) Veröffentlichungstag der Anmeldung: 12.12.2012
(73) Patentinhaber: Mercedes-Benz Group AG, 70372 Stuttgart (DE)
(72) Erfinder: KOPPITZ, Bernd, 73650 Winterbach (DE); REINHARDT, Rudolf, 73732 Esslingen (DE); SCHUSTER, Tobias, 73733 Esslingen (DE); STEINMETZ, Heiko, 73275 Ohmden (DE); ZIEGLER, Bernhard, 73098 Rechberghausen (DE)
(74) Vertreter: Novagraaf Group
(86) Internationale Anmeldenummer: PCT/EP2010/007513
(87) Internationale Veröffentlichungsnummer: WO 2011/095191

(56) Entgegenhaltungen:
- WO-A1-2006/084609
- WO-A1-2009/135553
- DE-A1-102006 028 771

## Beschreibung

Die Erfindung betrifft eine Warmnietverbindung nach dem Oberbegriff der Patentansprüche 1 bis 3. Eine Warmnietverbindung sowie ein Verfahren zu deren Herstellung ist aus DE 10 2006 028 771 A1 bekannt. Beim Warmnieten wird ein Warmniet in eine Öffnung eines Bauteils eingeführt und über eine Stirnfläche eines Schaftes des Warmniets mit einer Oberfläche eines weiteren Bauteils verschweißt. Dies kann durch Widerstandsschweißen, insbesondere durch Buckelschweißen geschehen. Anschließend wird unter plastischer Verformung des Warmniets der Schaft des Warmniets warm gestaucht, bis ein Kopf des Warmniets zumindest bereichsweise auf einer Oberfläche des ersten Bauteils aufliegt. Beim Stauchen wird Material des Schaftes seitlich verdrängt und füllt die Öffnung des ersten Bauteils zumindest bereichsweise aus. Zwischen den beiden Bauteilen entsteht eine Vorspannkraft, welche die Bauteile gegeneinander fixiert.

Weiterhin ist eine Warmnietverbindung aus der WO 2009/135553 A1 sowie der WO 2006/084609 A1 bekannt. WO2006/084609 A1 offenbart den Oberbegriff des Anspruchs 1. In diesen beiden Schriften werden unterschiedliche Ausgestaltungen der Niete sowie der Nietverbindung dargestellt.

Die Vorspannkraft ist bei bekannten Warmnietverfahren zwar prinzipiell nicht einstellbar.

Es fehlt jedoch in diesen Schriften eine Möglichkeit, die Vorspannkraft gezielt für den jeweiligen Anwendungsfall begrenzen zu können. In Verbindung mit zusätzlichen Betriebskräften kann jedoch eine zu große Vorspannkraft zu einer Überlastung bzw. zum Versagen der Warmnietverbindung führen.

Der vorliegenden Erfindung liegt somit die Aufgabe zu Grunde, eine Warmnietverbindung der eingangsgenannten Art weiterzuentwickeln, dass eine vorgegebene Vorspannkraft zwischen den zu verbindenden Bauteilen eingestellt werden kann.

Diese Aufgabe wird durch Warmnietverbindungen mit den Merkmalen der Patentansprüche 1 bis 3 gelöst.

Bei den erfindungsgemäßen Warmnietverbindungen werden konstruktive Maßnahmen an der Warmnietverbindung getroffen, um gezielt die Vorspannkraft der Verbindung einstellen zu können. Dadurch wird die Vorspannkraft, mit welcher der Kopf des Warmniets zumindest bereichsweise auf der Oberfläche des wenigstens einen Bauteils aufliegt, auf einen vorgegebenen Wert eingestellt. Hierdurch kann eine Warmnietverbindung geschaffen werden, die so ausgelegt ist, dass die Summe aus Vorspannkraft und im Betrieb auftretenden Belastungen der Warmnietverbindung immer unter einer maximalen Kraft bleibt. Damit wird ein Versagen der Warmnietverbindung unter Betriebsbelastungen zuverlässig vermieden.

Zum Einstellen der Vorspannkraft werden dabei je nach zu erwartender Betriebsbelastung geeignete Warmniete ausgewählt. Ein wesentlicher Faktor hierfür ist die Elastizität zwischen Nietkopf bzw. der Auflage des Nietkopfs und Schaft des Warmniets. Zur Reduzierung der Vorspannkraft kann beispielsweise ein Niet mit einer Ausnehmung in Form einer Hohlkehle zwischen Schaft und Kopf ausgewählt werden. Auch die Auswahl eines Warmniets mit geeigneter Kopfdicke und/oder einem geeigneten Hebelverhältnis zwischen Schaft und Kopfauflagefläche auf dem wenigstens einen Bauteil kann zur Einstellung der Vorspannkraft dienen.

Eine weitere Möglichkeit zur Einstellung der Vorspannkraft liegt in der Auswahl eines Warmniets mit geeignet gestaltetem Schaft. Beispielsweise können Niete mit gezielt eingeschränkten warmstauchbaren Bereichen gewählt werden. Solche Niete weisen eine geometrische Durchmesserabstufung auf. Nur der Schaftlängenanteil mit dem geringsten Querschnitt wird während des Warmnietens gestaucht. Die Schrumpfung des Nietschaftes beim Abkühlen beschränkt sich auf den erwärmten Bereich, wodurch dann die dabei entstehende Vorspannkraft verringert wird.

Auch durch die Gestaltung der Aufnahmeöffnung für den Warmniet kann die Vorspannkraft eingestellt werden. Hierzu können beispielsweise Hinterschnitte vorgesehen werden, die als gezielt gewählte Elastizitäten wirken.

Eine weitere Möglichkeit zur Auswahl der Vorspannkraft liegt in der Einstellung der Prozessparameter während des Schweißens bzw. Stauchens des Warmniets. Mit zunehmender Elektrodenkraft zwischen einer zum Schweißen bzw. Warmstauchen verwendeten Elektrode findet die Stauchung bei einer geringeren Nietschafttemperatur statt. Auf Grund der geringeren resultierenden Schrumpfung des gestauchten Nietes ist so eine geringere Vorspannkraft eingestellt. Auch die eingetragene Wärmemenge während des Warmnietens kann zur Einstellung der Vorspannkraft Anwendung finden. Durch die Kombination einer Nietstromgröße und einer Einnietzeit kann die Wärmemenge kontrolliert werden. Kleinere eingetragene Wärmemengen führen zu niedrigerer Vorspannkraft, große Wärmemengen zu höheren Vorspannkräften.

Die Erfindung betrifft eine Warmnietverbindung zum unlösbaren Befestigen wenigstens eines Bauteils an einem weiteren Bauteil. Die Warmnietverbindung umfasst einen Warmniet mit einem Kopf und einem sich daran anschließenden Schaft, dessen dem Kopf abgewandte Stirnfläche mit einer Oberfläche des weiteren Bauteils verschweißt ist, wobei der Schaft des Warmniets unter plastischer Verformung gestaucht ist.

Ein Aspekt der Erfindung betrifft eine weitere Warmnietverbindung der geschilderten Art, bei der erfindungsgemäß vorgesehen ist, dass das wenigstens eine erste Bauteil einen Hinterschnitt aufweist, welcher mit einem plastisch verformten Bereich des Schaftes zusammenwirkt. Durch den Hinterschnitt wird ein Teil des Schaftes des Warmniets gestützt, so dass lediglich der zwischen dem Hinterschnitt und dem Kopf des Warmniets befindliche Bereich des Warmniets zur Vorspannkraft beiträgt. Durch die Wahl der Lage des Hinterschnitts ist auch hier die genaue Einstellung der Vorspannkraft auf den gewünschten Wert möglich, um so Überlastungen der Nietverbindung zu vermeiden. Erfindungsgemäß weist das Bauteil an einer von dem Schaft abgewandten Fläche eine Dickenreduktion im Bereich der Warmnietverbindung auf.

Ein weiterer Aspekt der Offenbarung betrifft eine weitere Warmnietverbindung der geschilderten Art, bei der vorgesehen ist, dass eine Öffnung in dem wenigstens einen Bauteil eine Verbreiterung aufweist. Auch durch die Wahl der Breite und Höhe dieser Verbreiterung ist es möglich, die Vorspannkraft auf einen gewünschten Wert einzustellen. Ein weiterer Aspekt der Offenbarung betrifft eine weitere Warmnietverbindung der geschilderten Art, bei der vorgesehen ist, dass die Unterseite des Kopfes schirmförmig ausgestaltet ist, so dass der Kopf das Bauteil nur in einem äußeren Bereich berührt. Auf diese Weise kann das Verhältnis des Innendurchmessers der Berührungsfläche zwischen Kopf und Bauteil vergrößert und damit indirekt die Vorspannkraft beeinflusst werden.

Im Folgenden soll die Erfindung und ihre Ausführungsformen anhand der Zeichnung näher erläutert werden. Hierbei zeigen:
- Fig. 1 bis 5: Ausführungsformen von Nieten für Ausführungsbeispiele Warmnietverbindungen, die keinen Teil der Erfindung darstellen
- Fig. 6 bis 8: drei Ausführungsbeispiele einer Warmnietverbindung die keinen Teil der Erfindung darstellen sowie
- Fig. 9: ein weiteres Ausführungsbeispiel eines Niets für eine Warmnietverbindung, das keinen Teil der Erfindung darstellt.

Bei einer im Ganzen mit 10 bezeichneten Warmnietverbindung wird ein Warmniet 12 durch eine Öffnung 14 eines Bauteils 16 geführt und eine Stirnfläche 18 eines Schaftes 20 des Warmniets 12 mit einer Oberfläche 22 eines weiteren Bauteils 24 verschweißt. Der Schaft 20 wird anschließend warm gestaucht, so dass eine Fläche 26 eines Kopfes 28 des Warmniets 12 auf einer Oberfläche 30 des Bauteils 16 aufliegt. Durch die Schrumpfung des Warmniets 12 nach dem im warmen Zustand durchgeführten Stauchen entsteht eine Vorspannkraft zwischen den Bauteilen 16 und 24. Ist diese zu hoch, so kann die Warmnietverbindung 10 unter zusätzlicher Betriebsbelastung versagen.

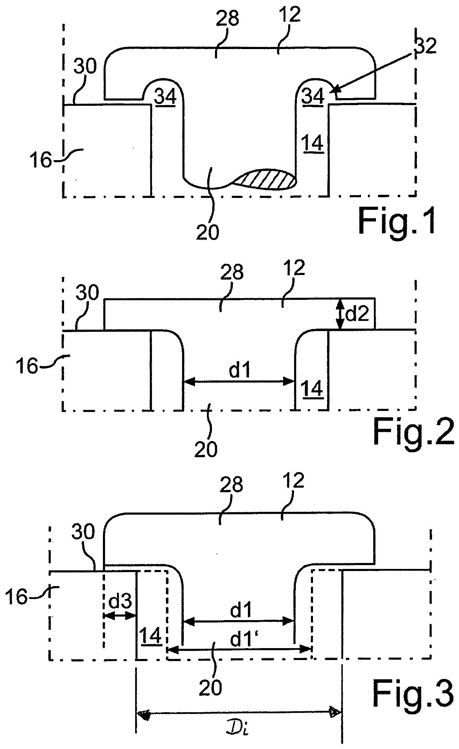

Eine Möglichkeit zur Verminderung der Vorspannkraft ist die Verwendung eines in Fig. 1 gezeigten Niets 12, der in einem Übergangsbereich 32 zwischen Kopf 28 und Schaft 20 eine Ausnehmung 34 in Form einer umfänglich umlaufenden Hohlkehle aufweist. Durch die Ausnehmung 34 wird die Kopfdicke reduziert und damit die Elastizität im Übergangsbereich 32 zwischen Kopf 28 und Schaft 20 erhöht, so dass der Warmniet 12 nach dem warmen Stauchen nachgeben kann, was die Vorspannkraft zwischen den Bauteilen 16 und 24 vermindert. Bei dieser Ausführungsform wird also der Kopf 28 gezielt geschwächt. Diese Gestaltung der Warmnietverbindung 10 ist vor allem dann zu bevorzugen, wenn der Durchmesser der Öffnung 14 konstruktiv festliegt und nicht mehr zu beeinflussen ist. Dann kann noch über die Ausnehmung 34 Einfluss auf die Vorspannkraft genommen werden.

Wie in Fig. 2 dargestellt, kann die Vorspannkraft auch durch das Verhältnis der Schaftdicke d1 zur Kopfdicke d2 eingestellt werden. Je kleiner die Kopfdicke d2, desto größer die Flexibilität im Übergangsbereich zwischen Kopf 28 und Schaft 20 des Warmniets 12. Diese Gestaltung der Warmnietverbindung 10 bietet sich vor allem dann an, wenn aus konstruktiven Gründen ein besonders dünner bzw. flacher Kopf 28 gewählt werden soll.

Wie Fig. 3 zeigt, bietet das Verhältnis zwischen Schaftdicke d1 und dem Innendurchmesser Dᵢ der Auflagefläche des Kopfes 28 auf der Oberfläche 30 des Bauteils 16 eine weitere Möglichkeit zur Einstellung der Vorspannkraft. Eine größerer Innendurchmesser Dᵢ im Verhältnis zur Schaftdicke d1 verändert im Vergleich mit einem kleineren Innendurchmesser Dᵢ bei gleicher Schaftdicke d1 das Hebelverhältnis zwischen Kopf 28 und Schaft 20 und damit auch die Vorspannkraft.

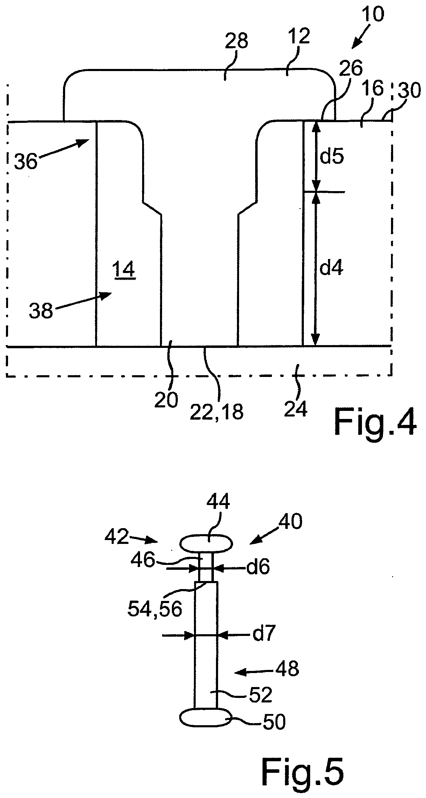

Auch die Gestaltung des Schaftes 20 selbst kann zur Einstellung der Vorspannkraft dienen. Im in Fig. 4 gezeigten Ausführungsbeispiel ist der Schaft 20 des Warmniets 12 in einen ersten Teilbereich 36 und einen zweiten Teilbereich 38 aufgeteilt, wobei der zweite Teilbereich 38 einen geringeren Durchmesser aufweist als der erste Teilbereich 36. Beim Stauchen des Warmniets 12 wird lediglich der zweite Teilbereich 38 gestaucht und der erste, stärkere Teilbereich 36 bleibt unverändert. Das Verhältnis der Längen d4 und d5 der beiden Teilbereiche 38, 36 bestimmt den gestauchten Anteil des Schaftes 20. Je kürzer der gestauchte Anteil, also die Länge d4 des Teilbereichs 38, desto geringer auch die Schrumpfung beim Abkühlen des Niets 12 nach dem Stauchen und desto geringer die Vorspannkraft.

Dies kann auch durch einen zweitteiligen Niet 40 realisiert werden, wie in Fig. 5 dargestellt. Ein erster Teilniet 42 umfasst einen Kopf 44 und einen Schaft 46 mit Durchmesser d6, ein zweiter Teilniet 48 umfasst einen Kopf 50 und einen Schaft 52 mit Durchmesser d7. Der Durchmesser d7 ist mit dem Teilniet 48 ist größer als der Durchmesser d6 des ersten Teilniets 42. Die beiden Teilniete werden in der Aufnahmeöffnung der zu vernietenden Bauteile über die Stirnflächen 54, 56 ihrer Schäfte 46, 52 verschweißt. Bei der anschließenden Stauchung wird lediglich der Schaft 46 des ersten Teilniets gestaucht, da dieser den geringeren Durchmesse aufweist. Über das Verhältnis der Schaftlängen 46, 52 kann auch hier die Vorspannkraft der Nietverbindung 10 reguliert werden.

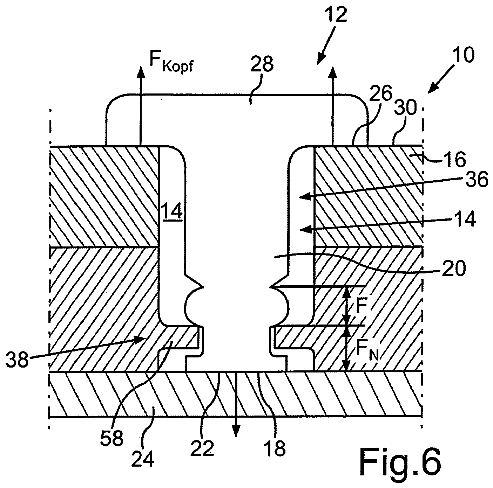

Die Gestaltung der Aufnahmeöffnung 14 kann auch Auswirkungen auf die Vorspannkraft der Nietverbindung 10 haben, wie in Fig. 6 dargestellt. Erfindungsgemäß weist die Aufnahmeöffnung 14 für den Niet 12 hier einen Hinterschnitt 58 auf. Gleichzeitig ist der Schaft 20 des Niets ebenfalls zweiteilig ausgebildet, d.h. in zwei Bereiche unterteilt, und umfasst einen ersten Bereich 36 mit höherem Durchmesser und einen zweiten Bereich 38 mit geringerem Durchmesser. Eine Stauchung findet nur im zweiten Teilbereich 38 statt, wobei sich der zweite Teilbereich 38 in seiner Kontur an den Hinterschnitt 58 anpasst. Der Hinterschnitt 58 stützt den Schaft 20 des Niets 12 bei der Schrumpfung, so dass ein Teil der Vorspannkraft durch den Hinterschnitt 58 gehalten wird. Dies reduziert die insgesamt auf den Kopf wirkende Vorspannkraft F_{Kopf}, so dass auch hier Überlastungen der Nietverbindung vermieden werden können. Gleichzeitig wird durch die Spannung im angestauchten Teil eine Dichtfunktion zwischen Niet 12 und Bauteil 24 erfüllt.

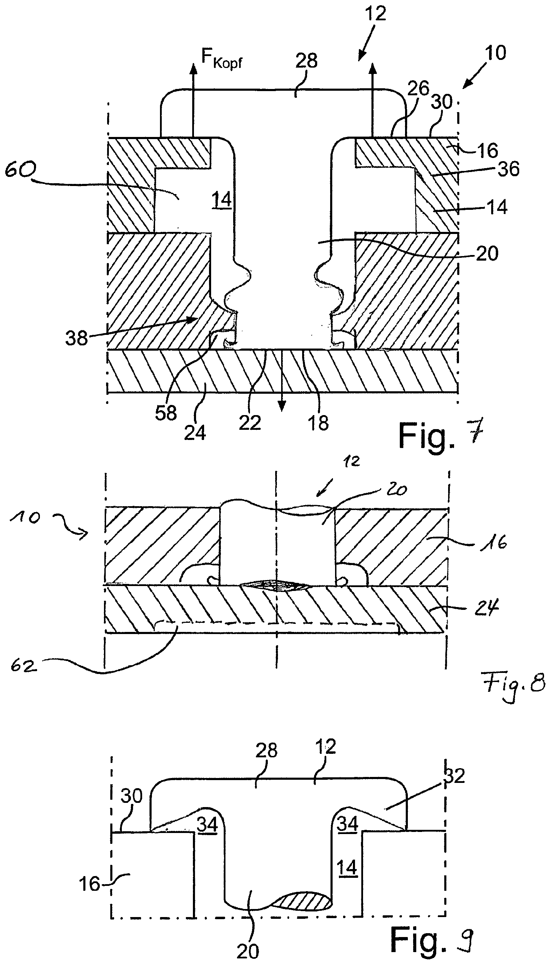

Fig. 7 zeigt eine alternative Ausgestaltung der Warmnietverbindung. In Abweichung von der in Fig. 6 dargestellten Ausführung ist hier die Aufnahmeöffnung 14 im Bauteil 16 durch eine Verbreiterung 60 bereichsweise vergrößert. Diese Verbreiterung 60 wirkt wie eine zusätzliche Elastizität in der Warmnietverbindung 10. Über die genaue Ausführung dieser Verbreiterung 60, also deren Höhe und Breite ist die Vorspannkraft gezielt beeinflussbar.

Fig. 8 zeigt eine weitere Möglichkeit, mit der zusätzliche Elastizität in die Warmnietverbindung 10 eingebracht werden kann. Erfindungsgemäß ist das Bauteil 24, an dem der Schaft 20 angeschweißt wird, mit einer Dickenreduktion 62 im Bereich der Warmnietverbindung 10 versehen. Diese Dickenreduktion 62 ist, wie in diesem Beispiel gezeigt, in Form einer Einprägung auf der von dem Bauteil 16 abgewandten Fläche des Bauteils 24, ausgeführt. Durch die dadurch erreichte Reduktion bzw. Variation der Dicke des Bauteils 24 im Bereich der Warmnietverbindung 10 kann gezielt Einfluss auf die Vorspannkraft genommen werden.

In Fig. 9 ist eine schirmförmige Ausgestaltung der Unterseite des Nietkopfs 28 dargestellt.

Dadurch wird erreicht, dass die Auflagefläche des Nietkopfs 28 auf dem Bauteil 16 in radialer Richtung von der Öffnung 14 nach außen verschoben wird. Dadurch vergrößert sich das Verhältnis des inneren Durchmessers Dᵢ der Auflagefläche zum Durchmesser d1 des Schafts 20. Dies beeinflusst bzw. verringert, wie oben bereits beschrieben, die Vorspannkraft.

Neben den in den angeführten Ausführungsbeispielen dargestellten runden Querschnitten von Niet 12 und/oder Öffnung 14 ist es auch möglich, andere Querschnitte zu verwenden. Denkbar sind insbesondere vier- oder mehreckige Querschnitte des Nietschaftes 20 und/oder der entsprechenden Aufnahmeöffnung 14. Dann gelten die oben für die konkreten Ausführungsbeispiele mit runden Querschnitten dargestellten Ausführungen zu den Durchmessern und deren Verhältnissen analog für die Größe des jeweiligen Querschnitts.

## Patentansprüche

1. Warmnietverbindung (10) zum unlösbaren Befestigen wenigstens eines Bauteils (16) an einem weiteren Bauteil (24), mit einem Warmniet (12) mit einem Kopf (28) und einem sich daran anschließenden Schaft (20), dessen dem Kopf (28) abgewandte Stirnfläche (18) mit einer Oberfläche (22) des weiteren Bauteils (24) verschweißt ist, wobei der Schaft (20) des Warmniets (12) unter plastischer Verformung gestaucht ist,
wobei der Warmniet (12) durch eine Aufnahmeöffnung (14) des wenigstens einen Bauteils (16) geführt ist und dass die Aufnahmeöffnung (14) einen Hinterschnitt (58) aufweist, welcher mit einem plastisch verformten Bereich (38) des Schaftes (20) zusammen wirkt, **dadurch gekennzeichnet, dass** das Bauteil (24) an einer von dem Schaft (20) abgewandten Fläche eine Dickenreduktion (62) im Bereich der Warmnietverbindung (10) aufweist.

2. Warmnietverbindung (10) nach Anspruch 1,
**dadurch gekennzeichnet, dass**
eine Öffnung (14) in dem wenigstens einen Bauteil (16) eine Verbreiterung (60) aufweist.

3. Warmnietverbindung (10) nach einem der vorhergehenden Ansprüche,
**dadurch gekennzeichnet, dass**
die Unterseite des Kopfes (28) schirmförmig ausgestaltet ist, so dass die Auflagefläche des Nietkopfs (28) auf dem Bauteil (16) in radialer Richtung von der Öffnung (14) nach außen verschoben ist.

## Claims

1. A hot rivet connection (10) for non-detachably fastening at least one component (16) to a further component (24), having a hot rivet (12) with a head (28) and an adjoining shaft (20), the end face (18) of which facing away from the head (28) is welded to a surface (22) of the further component (24),
wherein the shaft (20) of the hot rivet (12) is upset under plastic deformation, wherein the hot rivet (12) is guided through a receiving opening (14) of the at least one component (16), and in that the receiving opening (14) has an undercut (58) which interacts with a plastically deformed area (38) of the shaft (20), **characterized in that**
the component (24) has a thickness reduction (62) in the area of the hot rivet connection (10) on a surface facing away from the shaft (20).

2. The hot rivet connection (10) according to claim 1,
**characterized in that**
an opening (14) in the at least one component (16) has a widening (60).

3. The hot rivet connection (10) according to any of the preceding claims,
**characterized in that**
the underside of the head (28) is shaped like an umbrella, in such a manner that the bearing surface of the rivet head (28) on the component (16) is displaced outwardly in the radial direction from the opening (14).

## Revendications

1. Assemblage par rivetage à chaud (10) permettant de fixer de manière inamovible au moins une pièce (16) à une autre pièce (24), comportant un rivet posé à chaud (12) comportant une tête (28) et une tige (20) adjacente à celle-ci et dont la face frontale (18) opposée à la tête (28) est soudée à une surface (22) de l'autre pièce (24),
dans lequel la tige (20) du rivet posé à chaud (12) est comprimée par déformation plastique, dans lequel le rivet posé à chaud (12) est guidé à travers une ouverture de réception (14) de l'au moins une pièce (16) **et en ce que** l'ouverture de réception (14) présente une contre-dépouille (58) qui coopère avec une zone déformée plastiquement (38) de la tige (20), **caractérisé en ce que** la pièce (24) présente, au niveau d'une face opposée à la tige (20), une réduction d'épaisseur (62) dans la zone de l'assemblage par rivetage à chaud (10).

2. Assemblage par rivetage à chaud (10) selon la revendication 1,
**caractérisé en ce que**
une ouverture (14) dans l'au moins une pièce (16) présente un élargissement (60).

3. Assemblage par rivetage à chaud (10) selon l'une des revendications précédentes,
**caractérisé en ce que**
la face inférieure de la tête (28) est conçue en forme de bouclier, de sorte que la face d'appui de la tête de rivet (28) sur la pièce (16) est déplacée dans la direction radiale de l'ouverture (14) vers l'extérieur.
